# EUROPÄISCHE PATENTSCHRIFT

(11) **EP 3 653 333 B1**
(45) Veröffentlichungstag und Bekanntmachung des Hinweises auf die Patenterteilung: **20.01.2021**
(21) Anmeldenummer: 19191028.0
(22) Anmeldetag: 09.08.2019
(51) Int. Cl.: B23Q 1/00, B23Q 7/04, B23Q 7/14, B25J 15/00

(54) **PALETTENGREIFER UND ZUGEHÖRIGES BETRIEBSVERFAHREN**
PALETTE GRIPPER AND CORRESPONDING OPERATING METHOD
PRÉHENSEUR DE PALETTES ET PROCÉDÉ DE FONCTIONNEMENT ASSOCIÉ

(30) Priorität: 16.11.2018 DE 102018128883
(43) Veröffentlichungstag der Anmeldung: 20.05.2020
(73) Patentinhaber: STARK Spannsysteme GmbH, 6830 Rankweil (AT)
(72) Erfinder: GEIGER, Dietmar, 6850 Dornbirn (AT)
(74) Vertreter: v. Bezold & Partner Patentanwälte - PartG mbB

(56) Entgegenhaltungen:
- EP-A1- 0 937 537
- WO-A1-2004/052739
- WO-A1-2015/181502

## Beschreibung

Die Erfindung betrifft einen Palettengreifer zum Greifen einer Palette mit einem Aufbau (z.B. Maschinenschraubstock) und zum Absetzen der Palette auf einem Spannsystem, das durch ein Antriebsmedium betätigt wird, beispielsweise pneumatisch oder hydraulisch. Weiterhin umfasst die Erfindung ein entsprechendes Betriebsverfahren.

Es ist von Werkzeugmaschinen (z.B. Fräsmaschinen) bekannt, die zu bearbeitenden Werkstücke auf Paletten zu spannen, die dann schnell gewechselt werden können, wobei die Paletten in der Werkzeugmaschine beispielsweise auf Nullpunkt-Spannsystemen gespannt werden können. Dies erlaubt es, Spann-Operationen auf einer Palette außerhalb der Werkzeugmaschine vorzunehmen, während in der Werkzeugmaschine eine andere Palette gespannt ist, um die darauf gespannten Werkstücke zu bearbeiten. Es ist aus dem Stand der Technik weiterhin bekannt, derartige Paletten durch einen Roboter zu wechseln, der einen Robotergreifer aufweist, um die Paletten zu greifen. Der Roboter kann die Paletten in der Werkzeugmaschine absetzen und anschließend wieder aus der Werkzeugmaschine entnehmen. In der Werkzeugmaschine werden die Paletten dann in einem Spannsystem gespannt, das durch ein Antriebsmedium (z.B. Druckluft, Hydrauliköl) betätigt wird. Diese bekannte Art des Palettenwechsels funktioniert nur bei Werkzeugmaschinen, die das Antriebsmedium (z.B. Druckluft, Hydrauliköl) für das Spannsystem zum Spannen der Palette bereitstellen. Es gibt jedoch auch andere Werkzeugmaschinen, bei denen dies nicht der Fall ist, so dass die vorstehend beschriebene Art des Palettenwechsels bei diesen Werkzeugmaschinen nicht einsetzbar ist Die Patentschrift WO-A-2004/052739 offenbart einen Palettengreifer ohne Andockeinheit.

Die Patentschrift EP-A-0937537 offenbart ein Betriebsverfahren, wobei eine Palette auf einen Spannsystem abgesenkt und mit einem Antriebsmedium gespannt wird.

Der Erfindung liegt deshalb die Aufgabe zugrunde, einen solchen Palettenwechsel auch bei Werkzeugmaschinen zu ermöglichen, die kein Antriebsmedium (z.B. Druckluft, Hydrauliköl) für das Spannsystem zum Spannen der Palette bereitstellen.

Diese Aufgabe wird durch einen erfindungsgemäßen Palettengreifer und durch ein entsprechendes Betriebsverfahren gemäß den unabhängigen Ansprüchen gelöst.

Die Erfindung umfasst die allgemeine technische Lehre, das Antriebsmedium (z.B. Druckluft, Hydrauliköl) zur Betätigung des Spannsystems für die Palette nicht von der Werkzeugmaschine bereitzustellen, sondern über den Palettengreifer. Dies bietet den Vorteil, dass die vorstehend beschriebene Art des Palettenwechsels auch bei Werkzeugmaschinen einsetzbar ist, die kein Antriebsmedium (z.B. Druckluft, Hydrauliköl) für das Spannsystem für die Palette bereitstellt.

Der erfindungsgemäße Palettengreifer weist zunächst in Übereinstimmung mit dem Stand der Technik einen Roboterflansch auf, um den Palettengreifer an einem entsprechenden Montageflansch eines Roboters montieren zu können.

Der im Rahmen der Erfindung verwendete Begriff eines Roboters ist allgemein zu verstehen und umfasst beispielsweise mehrachsige Industrieroboter mit einer seriellen oder parallelen Roboterkinematik. Darüber hinaus umfasst der Begriff eines Roboters im Rahmen der Erfindung auch Handhabungsroboter mit mehreren linearen Roboterachsen.

Darüber hinaus umfasst der erfindungsgemäße Palettengreifer in Übereinstimmung mit dem Stand der Technik eine Greifeinrichtung, die es ermöglicht, eine Palette zu greifen. Derartige Greifeinrichtungen sind an sich aus dem Stand der Technik bekannt und können beispielsweise eine Palettengabel aufweisen, die zwei langgestreckte Gabelarme aufweist, um eine Palette seitlich zu greifen. Die Gabelarme der Palettengabel verlaufen hierbei vorzugsweise parallel zueinander und weisen vorzugsweise jeweils zwei Halteelemente (z.B. Bolzen, Aussparung) auf, die beim Greifen einer Palette jeweils in ein komplementäres Halteelement an der Palette eingreifen. Beispielsweise kann ein Bolzen an den Gabelarmen in eine entsprechende Aussparung in der Palette eingreifen.

Der erfindungsgemäße Palettengreifer zeichnet sich nun gegenüber dem Stand der Technik dadurch aus, dass in den Palettengreifer eine Andockeinheit integriert ist, die an das Spannsystem für die Palette andocken kann, um das Spannsystem für die Palette im angedockten Zustand von dem Palettengreifer mit dem zum Spannen erforderlichen Antriebsmedium (z.B. Druckluft, Hydrauliköl) zu versorgen.

Der im Rahmen der Erfindung verwendete Begriff eines Antriebsmediums ist allgemein zu verstehen und umfasst beispielsweise - wie bereits vorstehend erwähnt - Druckluft oder Hydrauliköl, falls das Spannsystem pneumatisch bzw. hydraulisch betätigt wird. Es ist jedoch grundsätzlich auch möglich, dass das Spannsystem für die Palette elektrisch betätigt wird, so dass es sich bei dem Antriebsmedium um elektrischen Strom handelt. Darüber hinaus besteht im Rahmen der Erfindung auch die Möglichkeit, dass über die Andockeinheit verschiedene Medien zugeführt werden, beispielsweise Druckluft, Hydrauliköl und elektrischer Strom.

In einem bevorzugten Ausführungsbeispiel der Erfindung weist der Palettengreifer eine Bewegungseinheit auf, um die Andockeinheit relativ zu dem Roboterflansch (d.h. innerhalb des Palettengreifers und relativ zu der gehaltenen Palette) bewegen zu können, was zum Andocken bzw. Abdocken der Andockeinheit erforderlich ist. Üblicherweise wird eine Palette nämlich in vertikaler Richtung von oben nach unten auf das zugehörige Spannsystem abgesenkt, wobei Spannzapfen an der Unterseite der Palette in entsprechende Spannbuchsen des Spannsystems eingeführt werden. Die Fluidkupplungen zur Versorgung des Spannsystems mit dem Antriebsmedium (z.B. Druckluft, Hydrauliköl) befinden sich dagegen in der Regel an der Seite des Spannsystems, was eine Bewegung der Andockeinheit innerhalb des Palettengreifers und damit relativ zu der gehaltenen Palette erfordert.

In dem bevorzugten Ausführungsbeispiel der Erfindung wird die Bewegungseinheit fluidisch angetrieben (z.B. pneumatisch). Die Erfindung ist jedoch hinsichtlich des Antriebs der Bewegungseinheit nicht auf einen fluidischen Antrieb beschränkt, sondern beispielsweise auch mit einem elektromotorischen Antrieb realisierbar.

Weiterhin ist zu erwähnen, dass die Bewegungseinheit zum Bewegen der Andockeinheit vorzugsweise eine Lineareinheit aufweist, welche die Andockeinheit linear verschiebt, vorzugsweise rechtwinklig zur Palettenebene, damit die Andockeinheit an das Spannsystem andocken kann.

Beispielsweise kann die Lineareinheit einen Führungswagen und eine Führungsschiene aufweisen, wobei die Führungsschiene in dem Führungswagen linear verschiebbar ist. Der Führungswagen kann zur spielarmen Führung der verschiebbaren Führungsschiene einen Kugelumlauf aufweisen.

In dem bevorzugten Ausführungsbeispiel der Erfindung ist der Führungswagen in Bezug auf den Roboterflansch ortsfest montiert, während die Führungsschiene in dem Führungswagen verschiebbar ist, so dass die Führungsschiene auch in Bezug auf den Roboterflansch des Palettengreifers verschiebbar ist.

Es ist jedoch alternativ auch möglich, dass die Führungsschiene in Bezug auf den Roboterflansch ortsfest montiert ist, während der Führungswagen entlang der Führungsschiene und damit auch relativ zu dem Roboterflansch verschiebbar ist.

In dem bevorzugten Ausführungsbeispiel der Erfindung weist die Lineareinheit einen Pneumatikzylinder auf, der die Führungsschiene mit der Andockeinheit in dem Führungswagen linear verschiebt.

Weiterhin ist zu erwähnen, dass die Andockeinheit vorzugsweise mindestens ein Zentrierelement aufweist (z.B. Zentrierbolzen), das beim Andocken an das Spannsystem in ein komplementäres Zentrierelement (z.B. Zentrierbuchse) in dem Spannsystem eingreift. Beim Andocken der Andockeinheit an das Spannsystem bewirken die paarweise komplementären Zentrierelemente in der Andockeinheit einerseits und in dem Spannsystem andererseits also eine Selbstzentrierung beim Andockvorgang.

Ferner ist zu erwähnen, dass die Andockeinheit vorzugsweise mehrere Fluidkupplungen aufweist, die an entsprechende Fluidkupplungen an dem Spannsystem angekoppelt werden können. Vorzugsweise sind sowohl Pneumatikkupplungen als auch Hydraulikkupplungen vorgesehen, um sowohl Druckluft als auch Hydrauliköl übertragen zu können. Beispielsweise können vier Pneumatickupplungen und zwei Hydraulikkupplungen vorgesehen sein, was eine Materialzirkulation des Hydrauliköls durch die Andockeinheit oder die Betätigung eines doppelt wirkenden Hydraulikzylinders ermöglicht.

In dem bevorzugten Ausführungsbeispiel der Erfindung weist die Andockeinheit eine Verriegelungsmechanik auf, um die Andockeinheit an dem Spannsystem mechanisch zu verriegeln. Im verriegelten Zustand werden die Fluidkupplungen in der Andockeinheit einerseits und in dem Spannsystem andererseits dann automatisch miteinander verbunden. Die Verriegelungsmechanik weist vorzugsweise einen Hydraulikzylinder auf, um die Andockeinheit an dem Spannsystem zu verriegeln, wobei der Hydraulikzylinder vorzugsweise einfach wirkend ist und die Andockeinheit bei einer Druckbeaufschlagung an dem Spannsystem verriegelt. Hierbei ist zu erwähnen, dass der Hydraulikzylinder vorzugsweise einen Kolben verschiebt, der auf Verriegelungskugeln wirkt, die im verriegelten Zustand in einer entsprechenden Buchse in dem Spannsystem verriegeln und dadurch die mechanische Verriegelung der Andockeinheit einerseits und des Spannsystems andererseits bewirken. Darüber hinaus kann die Verriegelungsmechanik eine Feder aufweisen, die den Kolben in eine Entriegelungsstellung vorspannt. Derartige Verriegelungsmechaniken sind an sich aus dem Stand der Technik bekannt.

Weiterhin ist zu erwähnen, dass die Erfindung nicht nur Schutz beansprucht für den vorstehend beschriebenen erfindungsgemäßen Palettengreifer. Vielmehr beansprucht die Erfindung auch Schutz für einen kompletten Roboter mit einem solchen erfindungsgemäßen Palettengreifer. Darüber hinaus beansprucht die Erfindung auch Schutz für ein komplettes Maschinensystem mit einer Werkzeugmaschine (z.B. Fräsmaschine) mit einem darin befindlichem Spannsystem zum Spannen einer Palette. Darüber hinaus umfasst das erfindungsgemäße Maschinensystem mindestens eine bewegliche und auswechselbare Palette, die an ihrer Oberseite einen Aufbau (z.B. Maschinenschraubstock) tragen kann. Schließlich umfasst das erfindungsgemäße Maschinensystem auch einen Roboter mit dem vorstehend beschriebenen erfindungsgemäßen Palettengreifer.

Es wurde bereits vorstehend kurz erwähnt, dass die Palette an ihrer Unterseite mindestens einen Spannzapfen aufweisen kann, der zum Spannen der Palette in der Werkzeugmaschine in jeweils eine entsprechende Spannbuchse des Spannsystems der Werkzeugmaschine eingeführt werden kann. In dem bevorzugten Ausführungsbeispiel der Erfindung weist das Spannsystem der Werkzeugmaschine vier Spannbuchsen auf, die vier Spannzapfen an der Unterseite der Paletten zugeordnet sind.

Schließlich ist zu erwähnen, dass die Erfindung auch ein entsprechendes Betriebsverfahren umfasst, wobei sich die einzelnen Verfahrensschritte des erfindungsgemäßen Betriebsverfahrens bereits aus der vorstehenden Beschreibung ergeben, so dass auf eine separate Beschreibung des erfindungsgemäßen Betriebsverfahrens verzichtet werden kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht eines erfindungsgemäßen Palettengreifers mit einer Palette über einer Platte einer Werkzeugmaschine mit mehreren Nullpunkt-Spannsystemen,
- Figur 2: die Perspektivansicht des Palettengreifers aus Figur 1 ohne die Palette und die darunter befindliche Platte,
- Figur 3: eine andere Perspektivansicht des Palettengreifers aus den Figuren 1 und 2,
- Figur 4: eine weitere Perspektivansicht des Palettengreifers von schräg unten,
- Figur 5: eine Perspektivansicht einer Bewegungseinheit des Palettengreifers,
- Figur 6: eine andere Perspektivansicht der Bewegungseinheit gemäß Figur 5,
- Figur 7: eine Perspektivansicht eines Teils des erfindungsgemäßen Palettengreifers mit einem Führungswagen der Bewegungseinheit,
- Figur 8: eine Perspektivansicht der Platte in der Werkzeugmaschine mit vier Nullpunkt-Spann-systemen,
- Figur 9: eine Perspektivansicht einer Palette mit einem darauf montierten Schraubstock als Aufbau,
- Figur 10: eine andere Perspektivansicht der Palette gemäß Figur 9 von schräg unten,
- Figur 11A: eine Perspektivansicht eines Hydraulikzylinders eines Verriegelungs-Systems der Andockeinheit,
- Figur 11B: eine Seitenansicht des Hydraulikzylinders mit dem Verriegelungs-System,
- Figur 11C: eine Schnittansicht entlang der Schnittlinie A-A in Figur 11B,
- Figur 12A: eine teilweise aufgeschnittene Seitenansicht der Platte in dem Werkzeugsystem mit einer Spannbuchse,
- Figur 12B: eine vergrößerte Detaildarstellung der Spannbuchse gemäß Figur 12A sowie
- Figur 13: ein Flussdiagramm zur Erläuterung des erfindungsgemäßen Betriebsverfahrens.

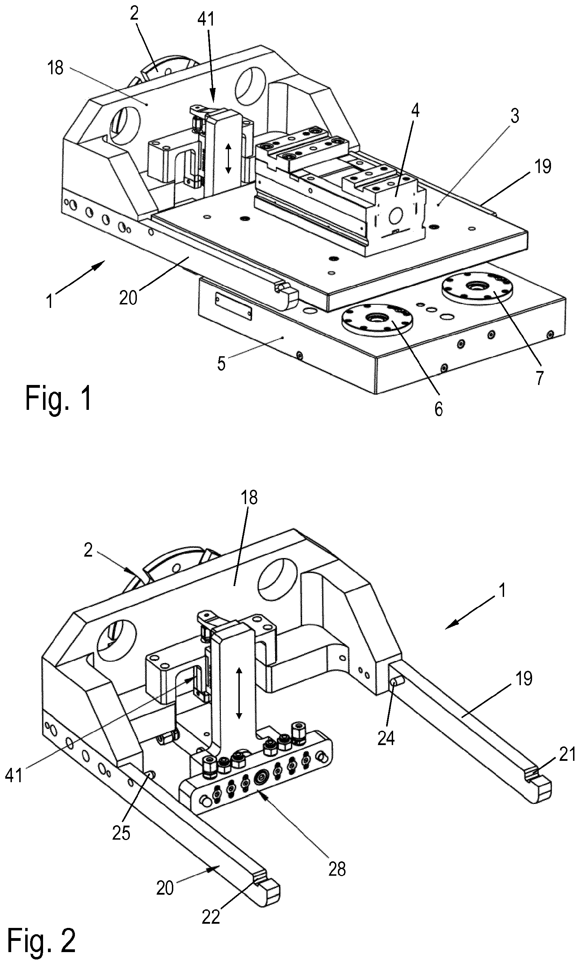

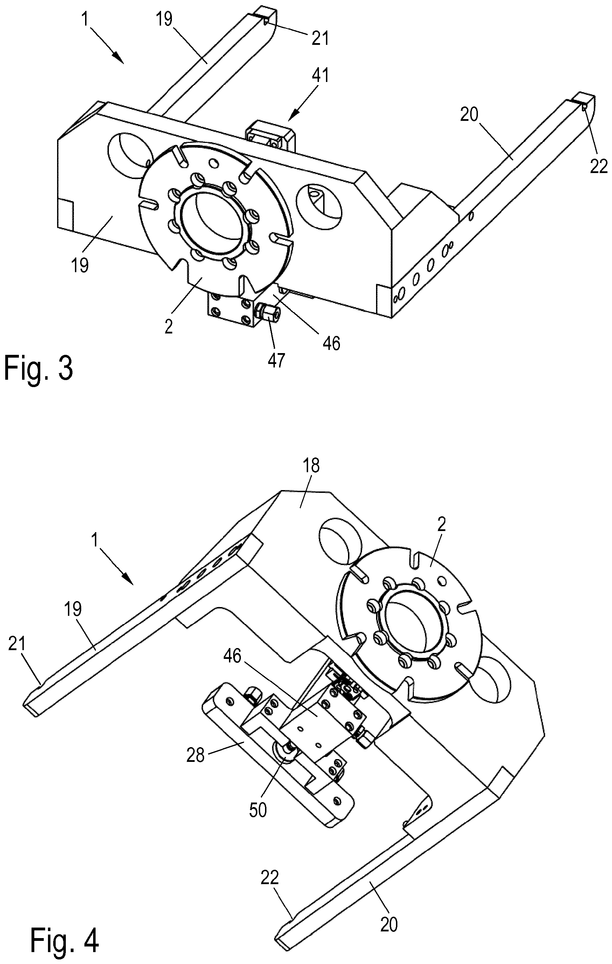

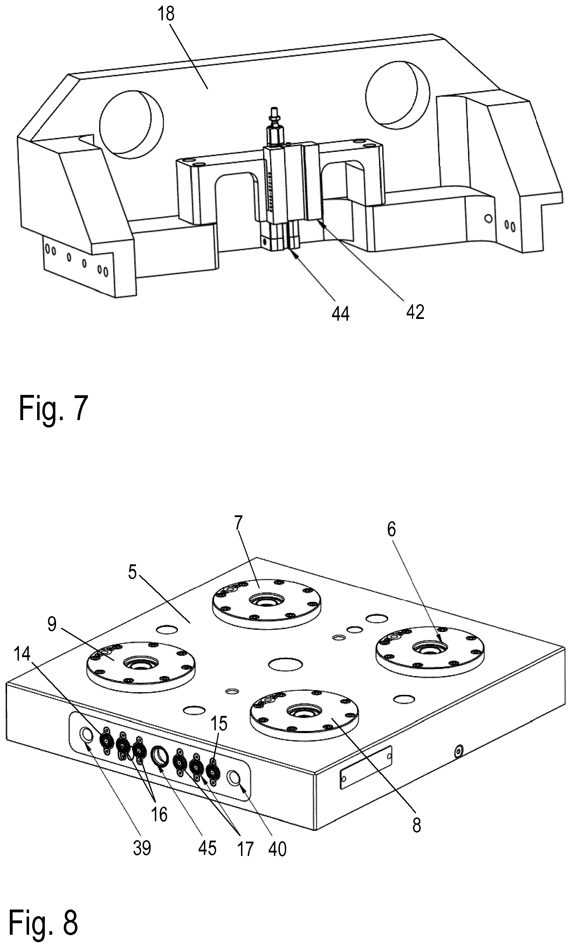

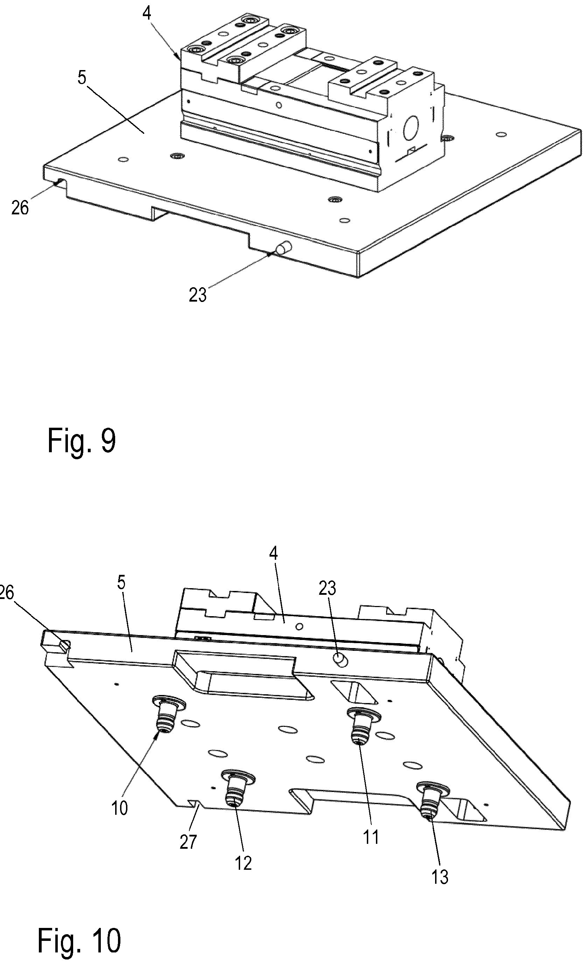

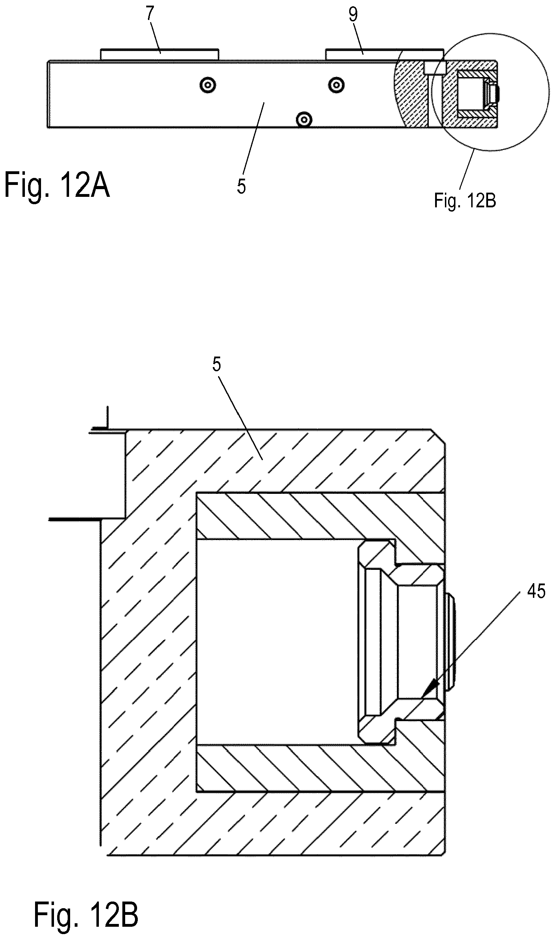

Im Folgenden wird nun unter Bezugnahme auf die Figuren 1-12B ein bevorzugtes Ausführungsbeispiel eines erfindungsgemäßen Palettengreifers 1 beschrieben, der mittels eines Roboterflanschs 2 an einem entsprechenden Montageflansch eines Roboters montiert werden kann, wobei der Roboter nicht dargestellt ist und in herkömmlicher Weise als mehrachsiger Industrieroboter mit einer seriellen Roboterkinematik ausgebildet sein kann.

Der Palettengreifer 1 ermöglicht das Greifen einer Palette 3 mit einem darauf montierten Maschinenschraubstock 4 als Aufbau, wobei anstelle des gezeigten Maschinenschraubstocks 4 auch ein anderer Aufbau auf der Palette 3 montiert werden kann.

Der Palettengreifer 1 kann die Palette 3 mit dem Maschinenschraubstock 4 und einem darin bespannten Werkstück dann auf einer Platte 5 absetzen, die in einer Werkzeugmaschine ortsfest montiert ist.

Die Platte 5 weist in herkömmlicher Weise an ihrer Oberseite vier Nullpunkt-Spannsysteme 6-9 auf, um die Palette 3 auf der Platte 5 der Werkzeugmaschine spannen zu können.

Hierzu befinden sich an der Unterseite der Platte 5 vier entsprechende Spannzapfen 10-13, die in die Spannbuchsen der zugehörigen Nullpunkt-Spannsysteme 6-9 eingeführt werden können.

Darüber hinaus weist die Platte 5 seitlich zwei Hydraulikkupplungen 14, 15 und vier Pneumatickupplungen 16, 17 auf.

Über die Hydraulikkupplungen 14, 15 und die Pneumatikkupplungen 16, 17 kann den Nullpunkt-Spannsystemen 6-9 Antriebsmedium zum Betätigen der Nullpunkt-Spannsysteme 6-9 zugeführt werden.

An dem Roboterflansch 2 des Palettengreifers 1 befindet sich zunächst ein Halterahmen 18, an dem eine Palettengabel zum Greifen der Palette 3 montiert ist, wobei die Palettengabel zwei parallele Gabelarme 19, 20 aufweist, um die Palette 3 seitlich zu greifen.

Die beiden Gabelarme 19, 20 weisen an ihrem distalen Ende an ihrer Oberseite jeweils eine Aussparung 21, 22 auf, die beim Halten der Palettengabel jeweils einen Bolzen 23 an den gegenüberliegenden Seiten der Palette 3 aufnehmen. In den Zeichnungen ist nur der Bolzen 23 an der einen Seite der Palette 3 sichtbar. An der gegenüberliegenden Seite der Palette 3 befindet sich seitlich jedoch an der gleichen Stelle ein weiterer Bolzen, der jedoch in den Zeichnungen verdeckt ist.

Darüber hinaus weisen die beiden Gabelarme 19, 20 der Palettengabel an ihrem proximalen Ende innen jeweils einen Bolzen 24, 25 auf, wobei die Bolzen 24, 25 jeweils in eine entsprechende Aussparung 26, 27 an den Seiten der Palette 3 eingreifen.

Die Bolzen 24, 25 und die Aussparungen 21, 22 in der Palettengabel bewirken also zusammen mit den Aussparungen 26, 27 und den Bolzen 23 in der Palette 3 ein sicheres Greifen der Palette 3 durch den Palettengreifer 1.

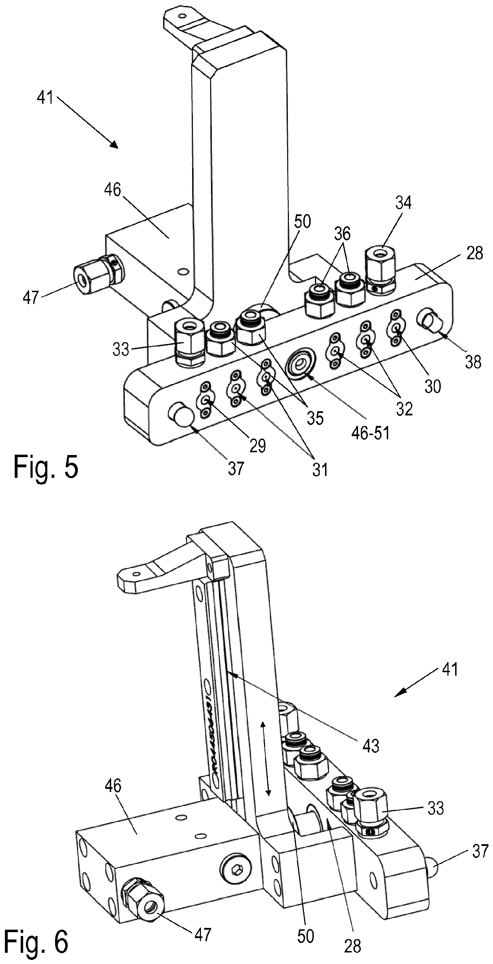

Der Palettengreifer 1 weist zur Bereitstellung der Antriebsmedien für die Nullpunkt-Spannsysteme 6-9 in der Platte 5 der Werkzeugmaschine eine Andockeinheit 28 auf, die insbesondere in den Figuren 5 und 6 dargestellt ist.

Die Andockeinheit 28 weist zunächst zwei Hydraulikkupplungen 29, 30 auf, die an die Hydraulickupplungen 14, 15 in der Platte 5 in der Werkzeugmaschine angedockt werden können, wie noch detailliert beschrieben wird.

Darüber hinaus weist die Andockeinheit 28 vier Pneumatikkupplungen 31, 32 auf, die an die entsprechenden Pneumatikkupplungen 16, 17 für die Nullpunkt-Spannsysteme 6-9 angedockt werden können, wie ebenfalls noch detailliert beschrieben wird.

An ihrer Oberseite weist die Andockeinheit 28 entsprechend zwei Hydraulikanschlüsse 33, 34 und vier Pneumatikanschlüsse 35, 36 auf. An die Hydraulikanschlüsse 33, 34 und die Pneumatikanschlüsse 35, 36 können entsprechende Druckleitungen (Druckschläuche) angeschlossen werden, die über den Roboter mit einer entsprechenden Pneumatik- bzw. Hydraulikversorgung verbunden sind. Zur Vereinfachung sind diese Druckleitungen in den Zeichnungen nicht dargestellt.

Darüber hinaus weist die Andockeinheit 28 zwei Zentrierbolzen 37, 38 auf, die beim Andocken an die Platte 5 in der Werkzeugmaschine in entsprechende Zentrierbuchsen 39, 40 in der Seitenfläche der Platte 5 eingreifen, was beim Andocken der Andockeinheit 28 an die Platte 5 eine Selbstzentrierung ermöglicht, wie ebenfalls noch detailliert beschrieben wird.

Die Andockeinheit 28 kann von einer Vertikaleinheit 41 in Richtung des Doppelpfeils bewegt werden, d.h. in einer Bewegungsrichtung rechtwinklig zur Palettenebene der Palette 3.

Hierzu weist die Vertikaleinheit 21 einen Führungswagen 42 auf, der an dem Halterahmen 18 des Palettengreifers 1 fest montiert ist.

Darüber hinaus weist die Vertikaleinheit 41 eine Führungsschiene 43 auf, wobei die Führungsschiene 43 in dem Führungswagen 42 verschiebbar gelagert ist, wobei die Lagerung der Führungsschiene 43 in dem Führungswagen 42 mittels eines Kugelumlaufs spielarm erfolgt.

An der verschiebbaren Führungsschiene 43 ist die Andockeinheit 28 montiert, so dass die Andockeinheit 28 in Richtung des Doppelpfeils in vertikaler Richtung verfahren werden kann.

Darüber hinaus umfasst die Vertikaleinheit 21 einen Pneumatikzylinder 44, um die Führungsschiene 43 mit der Andockeinheit 28 verschieben zu können. Die Druckluftversorgung für den Pneumatikzylinder 44 ist zur Vereinfachung nicht dargestellt und erfolgt ebenfalls durch den Roboter.

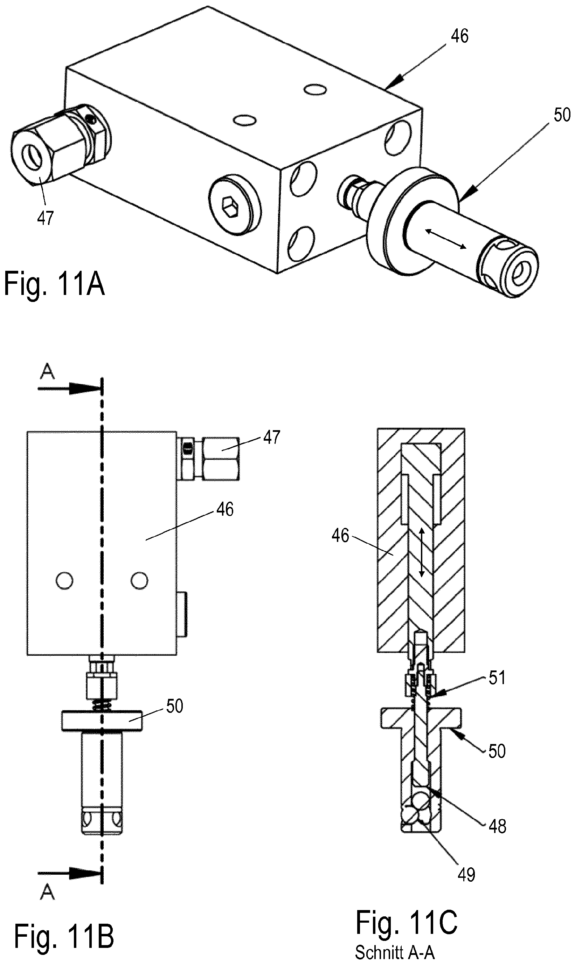

Ferner weist der Palettengreifer 1 eine Verriegelungsmechanik auf, die insbesondere in den Figuren 11A-11C dargestellt ist und es ermöglicht, die Andockeinheit 28 in einer entsprechenden Buchse 45 in der Seitenfläche der Platte 5 zu verriegeln. Die Verriegelungsmechanik umfasst einen Hydraulikzylinder 46, der über einen Hydraulikanschluss 47 mit Hydrauliköl versorgt wird, wobei an dem Hydraulikanschluss 47 Druckleitungen angeschlossen sind, die zur Vereinfachung nicht dargestellt sind und vom Roboter kommen.

In dem Hydraulikzylinder 46 ist ein Kolben 48 verschiebbar, der auf Verriegelungskugeln 49 wirken kann. Wenn der Kolben 48 vollständig ausgefahren ist, so werden die Verriegelungskugeln 49 seitlich nach außen gedrückt und verriegeln dann in der Buchse 45 in der Platte 5 der Werkzeugmaschine.

Die Verriegelungsmechanik ist als Verriegelungs-System ausgebildet, was an sich aus dem Stand der Technik bekannt ist. Im entriegelten Zustand schließt das Verriegelungs-System bündig mit der Stirnfläche der Andockeinheit 28 ab. Bei einer Druckbeaufschlagung des Hydraulikzylinders 46 wird das Verriegelungs-System dann zunächst aus der Andockeinheit 28 herausgefahren, bis ein Bund 50 des Verriegelungs-Systems innen an der Andockeinheit 28 anliegt. Beim weiteren Herausfahren des Kolbens 48 verdrängt dieser dann die Verriegelungskugel 49 seitlich nach außen, wodurch das Verriegelungs-System in der Buchse 45 verriegelt wird.

Bei diesem Verriegelungsvorgang werden auch die Hydraulikkupplungen 14, 15 und die Pneumatikkupplungen 16, 17 einerseits mit den Hydraulikkupplungen 29, 30 und den Pneumatikkupplungen 31, 32 andererseits gekoppelt, so dass die Nullpunkt-Spannsysteme 6-9 mit Druckluft und Hydrauliköl versorgt werden können.

Ferner ist noch zu erwähnen, dass das Verriegelungs-System eine Spannfeder 51 aufweist, um den Bund 50 relativ zu dem Kolben 48 vorzuspannen.

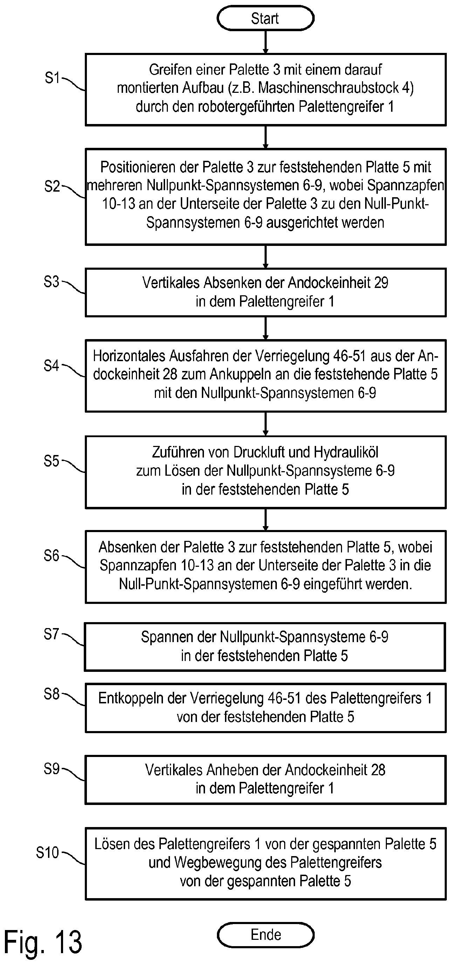

Im Folgenden wird nun unter Bezugnahme auf das Flussdiagramm in Figur 13 die Betriebsweise des erfindungsgemäßen Palettengreifers 1 beschrieben. Dabei wird davon ausgegangen, dass eine Palette in eine Werkzeugmaschine eingesetzt werden soll.

In einem ersten Schritt S1 greift der Palettengreifer 1 die Palette 3 mit dem darauf montierten Maschinenschraubstock 4, wobei in dem Maschinenschraubstock 4 dann ein zu bearbeitendes Werkstück gespannt ist.

In einem Schritt S2 positioniert der Roboter dann den Palettengreifer 1 mit der davon gehaltenen Palette 3 über den Nullpunkt-Spannsystemen 6-9 in der Werkzeugmaschine, wobei die Spannzapfen 10-13 an der Unterseite der Palette 3 zu den entsprechenden Spannbuchsen der Nullpunkt-Spannsysteme 6-9 ausgerichtet werden.

Im nächsten Schritt S3 wird dann die Andockeinheit 28 in dem Palettengreifer 1 abgesenkt, indem der Pneumatikzylinder 44 mit Druckluft beaufschlagt wird. Dieses vertikale Absenken der Andockeinheit 28 dient dazu, die Hydraulikkupplungen 29, 30 in der Andockeinheit 28 vertikal an den zugehörigen Hydraulikkupplungen 14, 15 in dem Spannsystem auszurichten. Darüber hinaus sind dann auch die Pneumatikkupplungen 31, 32 in der Andockeinheit 28 in vertikaler Richtung an den Pneumatikkupplungen 16, 17 in dem Spannsystem ausgerichtet.

Nach dieser vertikalen Ausrichtung erfolgt dann in einem Schritt S4 ein horizontales Ausfahren der Verriegelung aus der Andockeinheit 28, um die Andockeinheit 28 mit der Platte 5 in der Werkzeugmaschine zu verriegeln, wobei auch die Fluidkupplungen gekoppelt werden.

Im nächsten Schritt S5 wird dann von Seiten des Roboters Druckluft und Hydrauliköl zum Lösen der Nullpunkt-Spannsysteme 6-9 zugeführt.

Im nächsten Schritt S6 kann die Palette 3 zur feststehenden Platte 5 abgesenkt werden, wobei die Spannzapfen 10-13 an der Unterseite der Palette 3 in die entsprechenden Spannbuchsen der Nullpunkt-Spannsysteme 6-9 eingeführt werden.

Danach können im Schritt S7 die Nullpunkt-Spannsysteme 6-9 gespannt und die Palette 3 somit mit der feststehenden Platte 5 verriegelt werden.

In einem weiteren Schritt S8 wird das Verriegelungs-System des Palettengreifers 1 dann entkoppelt, wobei die Nullpunkt-Spannsysteme 6-9 dann auch im drucklosen Zustand gespannt bleiben.

In einem Schritt S9 wird die Andockeinheit 28 dann in dem Palettengreifer 1 wieder vertikal angehoben.

Schließlich kann der Palettengreifer 1 dann in einem Schritt S10 von der gespannten Palette 3 gelöst und weg bewegt werden.

Danach kann dann die Bearbeitung in der Werkzeugmaschine erfolgen.

### Bezugszeichenliste:

- 1: Palettengreifer
- 2: Roboterflansch des Palettengreifers
- 3: Palette
- 4: Maschinenschraubstock auf der Palette
- 5: Platte in der der Werkzeugmaschine
- 6-9: Nullpunkt-Spannsysteme auf der Platte
- 10-13: Spannzapfen an der Unterseite der Palette
- 14, 15: Hydraulikkupplungen im Spannsystem
- 16, 17: Pneumatikkupplungen im Spannsystem
- 18: Halterahmen des Palettengreifers
- 19, 20: Gabelarme der Palettengabel
- 21, 22: Aussparungen an den Gabelarmen der Palettengabel
- 23: Bolzen an der Palette
- 24, 25: Bolzen an der Palettengabel
- 26, 27: Aussparungen in der Palette
- 28: Andockeinheit
- 29, 30: Hydraulikkupplungen in der Andockeinheit
- 31, 32: Pneumatikkupplungen in der Andockeinheit
- 33, 34: Hydraulikanschlüsse
- 35, 36: Pneumatikanschlüsse
- 37, 38: Zentrierbolzen an der Andockeinheit
- 39, 40: Zentrierbuchsen in der Seitenfläche der Platte mit den Nullpunkt-Spannsystemen
- 41: Vertikaleinheit
- 42: Führungswagen der Vertikaleinheit
- 43: Führungsschiene der Vertikaleinheit
- 44: Pneumatikzylinder der Vertikaleinheit
- 45: Buchse in der Platte zur Verriegelung
- 46: Hydraulikzylinder des Verriegelungs-Systems
- 47: Hydraulikanschluss des Verriegelungs-Systems
- 48: Kolben des Verriegelungs-Systems
- 49: Verriegelungskugeln des Verriegelungs-Systems
- 50: Bund des Verriegelungs-Systems
- 51: Spannfeder des Verriegelungs-Systems

## Patentansprüche

1. Palettengreifer (1) zum Greifen einer Palette (3) mit einem Aufbau (4), insbesondere mit einem Maschinenschraubstock (4), und zum Absetzen der Palette (3) auf einem Spannsystem (6-9), das durch ein Antriebsmedium betätigt wird, insbesondere pneumatisch oder hydraulisch, mit
a) einem Roboterflansch (2) zur Montage des Palettengreifers (1) an einem Roboter, der den Palettengreifer (1) mit der Palette (3) bewegt und auf dem Spannsystem (6-9) absetzt, und
b) einer an dem Roboterflansch (2) angebrachten Greifeinrichtung (19-22, 24, 25) zum Greifen der Palette (3),
**gekennzeichnet durch**
c) eine in den Palettengreifer (1) integrierte Andockeinheit (28) zum Andocken an das Spannsystem (6-9), um das Spannsystem (6-9) im angedockten Zustand von dem Palettengreifer (1) mit dem zum Spannen erforderlichen Antriebsmedium zu versorgen.

2. Palettengreifer (1) nach Anspruch 1, **gekennzeichnet durch** eine Bewegungseinheit zur Bewegung der Andockeinheit (28) relativ zu dem Roboterflansch (2) zum Andocken oder Abdocken der Andockeinheit (28).

3. Palettengreifer (1) nach Anspruch 2, **dadurch gekennzeichnet,**
a) **dass** die Bewegungseinheit (41) fluidisch angetrieben ist, insbesondere pneumatisch, und/oder
b) **dass** die Bewegungseinheit (41) eine Lineareinheit (42, 43) aufweist, welche die Andockeinheit (28) linear verschiebt, und/oder
c) **dass** die Lineareinheit (42, 43) die Andockeinheit (28) rechtwinklig zur Palettenebene verschiebt, und/oder
d) **dass** die Lineareinheit (42, 43) einen Führungswagen (42) und eine Führungsschiene (43) aufweist, die in dem Führungswagen (42) linear verschiebbar ist, und/oder
e) **dass** der Führungswagen (42) zur spielarmen Führung der verschiebbaren Führungsschiene (43) einen Kugelumlauf aufweist, und/oder
f) **dass** der Führungswagen (42) in Bezug auf den Roboterflansch (2) ortsfest montiert ist, und/oder
g) **dass** die Lineareinheit (42, 43) einen Pneumatikzylinder (44) aufweist, der die Führungsschiene (43) mit der Andockeinheit (28) in dem Führungswagen (42) linear verschiebt.

4. Palettengreifer (1) nach einem der vorhergehenden Ansprüche, **dadurch gekennzeichnet,**
a) **dass** die Andockeinheit (28) mindestens ein Zentrierelement (37, 38) aufweist, insbesondere einen Zentrierbolzen (37, 38), zum zentrierenden Eingriff in ein komplementäres Zentrierelement (39, 40) in dem Spannsystem (6-9), und/oder
b) **dass** die Andockeinheit (28) mehrere, insbesondere sechs, Fluidkupplungen (29, 30, 31, 32) aufweist zum Ankuppeln an entsprechende Fluidkupplungen (14, 15, 16, 17) in dem Spannsystem (6-9), und/oder
c) **dass** die Andockeinheit (28) mehrere, insbesondere vier, Pneumatikkupplungen (31, 32) aufweist zum Ankuppeln an entsprechende Pneumatikkupplungen (16, 17) in dem Spannsystem (6-9), und/oder
d) **dass** die Andockeinheit (28) mehrere, insbesondere zwei, Hydraulikkupplungen (29, 30) aufweist zum Ankuppeln an entsprechende Hydraulikkupplungen (14, 15) in dem Spannsystem (6-9).

5. Palettengreifer (1) nach einem der vorhergehenden Ansprüche, **dadurch gekennzeichnet, dass** die Andockeinheit (28) eine Verriegelungsmechanik (46-51) aufweist zur lösbaren mechanischen Verriegelung der Andockeinheit (28) einerseits und des Spannsystems (6-9) andererseits.

6. Palettengreifer (1) nach einem der vorhergehenden Ansprüche, **dadurch gekennzeichnet,**
a) **dass** die Greifeinrichtung (19-22, 24, 25) eine Palettengabel aufweist mit zwei langgestreckten Gabelarmen (19, 20) zum seitlichen Greifen der Palette (3), und/oder
b) **dass** die Gabelarme (19, 20) der Palettengabel parallel zueinander verlaufen, und/oder
c) **dass** die Gabelarme (19, 20) jeweils zwei Halteelemente (21, 22, 24, 25) aufweisen, die beim Greifen der Palette (3) jeweils in ein komplementäres Haltelement (23, 26, 27) an der Palette (3) eingreifen, und/oder
d) **dass** die komplementären Halteelemente (21-27) ein Bolzen (23, 24, 25) und eine Aussparung (21, 22, 26, 27) sind.

7. Roboter mit einem Palettengreifer (1) nach einem der vorhergehenden Ansprüche.

8. Maschinensystem mit
a) einer Werkzeugmaschine mit
a1) einer Platte (5) und
a2) mindestens einem Spannsystem (6-9) auf der Platte (5) der Werkzeugmaschine,
b) einer beweglichen Palette (3) mit einem Aufbau (4), insbesondere einem Maschinenschraubstock (4), und
c) dem Roboter gemäß Anspruch 7 mit dem Palettengreifer (1) nach einem der Ansprüche 1 bis 6, wobei der Roboter die Palette (3) wahlweise auf dem Spannsystem (6-9) der Werkzeugmaschine absetzt oder von dem Spannsystem (6-9) der Werkzeugmaschine entnimmt.

9. Maschinensystem nach Anspruch 8, **dadurch gekennzeichnet,**
a) **dass** die Palette (3) an ihrer Unterseite mindestens einen, vorzugsweise vier, Spannzapfen (10-13) aufweist zum Einführen in jeweils eine entsprechende Spannbuchse des Spannsystems (6-9), und/oder
b) **dass** die Palette (3) an ihrer Oberseite den Aufbau (4) trägt, insbesondere den Maschinenschraubstock (4).

10. Betriebsverfahren für einen Palettengreifer (1), insbesondere für einen Palettengreifer (1) nach einem der Ansprüche 1 bis 6, mit den folgenden Schritten:
a) Greifen einer Palette (3) durch den Palettengreifer (1), der von einem Roboter beweglich geführt wird,
b) Absenken der Palette (3) auf einem Spannsystem (6-9) mittels des Roboters,
c) Spannen der Palette (3) auf dem Spannsystem (6-9), wobei das Spannsystem (6-9) zum Spannen mit einem Antriebsmedium angesteuert wird, insbesondere pneumatisch oder hydraulisch,
**dadurch gekennzeichnet,**
d) **dass** das zum Spannen der Platte (5) auf dem Spannsystem (6-9) dienende Antriebsmedium dem Spannsystem (6-9) von dem Palettengreifer (1) zugeführt wird.

11. Betriebsverfahren nach Anspruch 10, **dadurch gekennzeichnet,**
a) **dass** zum Spannen des Spannsystems (6-9) eine Andockeinheit (28) des Palettengreifers (1) an das Spannsystem (6-9) angedockt wird, um das Antriebsmedium an das Spannsystem (6-9) zu liefern, und/oder
b) **dass** die Andockeinheit (28) des Palettengreifer (1) nach einem Spannvorgang von dem Spannsystem (6-9) abgedockt wird.

12. Betriebsverfahren nach Anspruch 11, **dadurch gekennzeichnet,**
a) **dass** die Andockeinheit (28) zum Andocken und Abdocken eine Andockbewegung ausführt, die vorzugsweise rechtwinklig zur Palettenebene der Palette (3) ausgerichtet ist, und
b) **dass** die Andockeinheit (28) zur lösbaren mechanischen Verriegelung der Andockeinheit (28) einerseits und des Spannsystems (6-9) andererseits eine Verriegelungsbewegung ausführt, die vorzugsweise parallel zur Palettenebene der Palette (3) ausgerichtet ist.

13. Betriebsverfahren nach Anspruch 12, **dadurch gekennzeichnet,**
a) **dass** die Andockbewegung pneumatisch angetrieben wird, und/oder
b) **dass** die Verriegelungsbewegung hydraulisch angetrieben wird.

## Claims

1. Pallet gripper (1) for gripping a pallet (3) with a structure (4), in particular with a machine vice (4), and for depositing the pallet (3) on a clamping system (6-9) which is actuated by a drive medium, in particular pneumatically or hydraulically, with
a) a robot flange (2) for mounting the pallet gripper (1) on a robot, which moves the pallet gripper (1) with the pallet (3) and places it on the clamping system (6-9), and
b) a gripping device (19-22, 24, 25) attached to the robot flange (2) for gripping the pallet (3), **characterized by**
c) a docking unit (28) integrated in the pallet gripper (1) for docking with the clamping system (6-9) in order to supply the clamping system (6-9) in the docked state from the pallet gripper (1) with the drive medium required for clamping.

2. Pallet gripper (1) according to claim 1, **characterized by** a movement unit for moving the docking unit (28) relative to the robot flange (2) for docking or undocking the docking unit (28).

3. Pallet gripper (1) according to claim 2, **characterized in**
a) **that** the movement unit (41) is fluidically driven, in particular pneumatically, and/or
b) **that** the movement unit (41) comprises a linear unit (42, 43) which displaces the docking unit (28) linearly, and/or
c) **that** the linear unit (42, 43) displaces the docking unit (28) at right angles to the pallet plane, and/or
d) **that** the linear unit (42, 43) comprises a guide carriage (42) and a guide rail (43) which is linearly displaceable in the guide carriage (42), and/or
e) **that** the guide carriage (42) has a recirculating ball bearing for low-backlash guidance of the displaceable guide rail (43), and/or
f) **that** the guide carriage (42) is mounted in a fixed position with respect to the robot flange (2), and/or
g) **that** the linear unit (42, 43) has a pneumatic cylinder (44) which linearly displaces the guide rail (43) with the docking unit (28) in the guide carriage (42).

4. Pallet gripper (1) according to one of the preceding claims, **characterized in**
a) **that** the docking unit (28) has at least one centering element (37, 38), in particular a centering pin (37, 38), for centering engagement in a complementary centering element (39, 40) in the clamping system (6-9), and/or
b) **that** the docking unit (28) comprises several, in particular six, fluid couplings (29, 30, 31, 32) for coupling to corresponding fluid couplings (14, 15, 16, 17) in the clamping system (6-9), and/or
c) **that** the docking unit (28) comprises several, in particular four, pneumatic couplings (31, 32) for coupling to corresponding pneumatic couplings (16, 17) in the clamping system (6-9), and/or
d) **that** the docking unit (28) comprises several, in particular two, hydraulic couplings (29, 30) for coupling to corresponding hydraulic couplings (14, 15) in the clamping system (6-9).

5. Pallet gripper (1) according to one of the preceding claims, **characterized in that** the docking unit (28) has a locking mechanism (46-51) for releasable mechanical locking of the docking unit (28) on the one hand and the clamping system (6-9) on the other hand.

6. Pallet gripper (1) according to one of the preceding claims, **characterized in**
a) **that** the gripping device (19-22, 24, 25) has a pallet fork with two elongated fork arms (19, 20) for gripping the pallet (3) laterally, and/or
b) **that** the fork arms (19, 20) of the pallet fork run parallel to each other, and/or
c) **that** the fork arms (19, 20) each have two retaining elements (21, 22, 24, 25) which, when the pallet (3) is gripped, each engage in a complementary retaining element (23, 26, 27) on the pallet (3), and/or
d) **that** the complementary retaining elements (21-27) are a bolt (23, 24, 25) and a recess (21, 22, 26, 27).

7. Robot with a pallet gripper (1) according to any of the preceding claims.

8. Machine system with
a) a machine tool with
a1) a plate (5) and
a2) at least one clamping system (6-9) on the plate (5) of the machine tool,
b) a movable pallet (3) with a structure (4), in particular a machine vice (4), and
c) the robot according to claim 7 with the pallet gripper (1) according to one of claims 1 to 6, wherein the robot selectively places the pallet (3) on the clamping system (6-9) of the machine tool or removes it from the clamping system (6-9) of the machine tool.

9. Machine system according to claim 8, **characterized in that**
a) that the pallet (3) has at least one, preferably four, clamping pins (10-13) on its underside for insertion into a corresponding clamping bush of the clamping system (6-9), and/or
b) that the pallet (3) carries the body (4) on its upper side, in particular the machine vice (4).

10. Operating method for a pallet gripper (1), in particular for a pallet gripper (1) according to one of claims 1 to 6, with the following steps:
a) Gripping a pallet (3) by the pallet gripper (1), which is movably guided by a robot,
b) lowering the pallet (3) on a clamping system (6-9) by means of the robot,
c) clamping of the pallet (3) on the clamping system (6-9), the clamping system (6-9) being actuated for clamping with a drive medium, in particular pneumatically or hydraulically,
**characterized in**
d) **that** the drive medium serving to clamp the plate (5) on the clamping system (6-9) is supplied to the clamping system (6-9) by the pallet gripper (1).

11. Operating method according to claim 10, **characterized in**
a) **that** for clamping the clamping system (6-9) a docking unit (28) of the pallet gripper (1) is docked to the clamping system (6-9) in order to supply the drive medium to the clamping system (6-9), and/or
b) **that** the docking unit (28) of the pallet gripper (1) is undocked from the clamping system (6-9) after a clamping process.

12. Operating method according to claim 11, **characterized in**
a) **that** the docking unit (28) performs a docking movement for docking and undocking, which is preferably aligned at right angles to the pallet plane of the pallet (3), and
b) **that** the docking unit (28) executes a locking movement for releasable mechanical locking of the docking unit (28) on the one hand and of the clamping system (6-9) on the other hand, which locking movement is preferably aligned parallel to the pallet plane of the pallet (3).

13. Operating method according to claim 12, **characterized in**
a) **that** the docking movement is pneumatically driven, and/or
b) **that** the locking movement is driven hydraulically.

## Revendications

1. Préhenseur de palette (1) pour la préhension d'une palette (3) avec une structure (4), en particulier avec un étau de machine (4), et pour le dépôt de la palette (3) sur un système de serrage (6-9), qui est actionné par un milieu d'entraînement, en particulier par voie pneumatique ou hydraulique, avec
a) une bride de robot (2) pour le montage du préhenseur de palette (1) au niveau d'un robot qui déplace le préhenseur de palette (1) avec la palette (3) et le dépose sur le système de serrage (6-9), et
b) un dispositif de préhension (19-22, 24, 25) monté au niveau de la bride de robot (2) pour la préhension de la palette (3),
**caractérisé par**
c) une unité d'amarrage (28) intégrée dans le préhenseur de palette (1) pour l'amarrage au système de serrage (6-9) afin d'alimenter le système de serrage (6-9) dans l'état amarré du préhenseur de palette (1) en milieu d'entraînement nécessaire au serrage.

2. Préhenseur de palette (1) selon la revendication 1, **caractérisé par** une unité de déplacement pour le déplacement de l'unité d'amarrage (28) par rapport à la bride de robot (2) pour l'amarrage ou la séparation de l'unité d'amarrage (28).

3. Préhenseur de palette (1) selon la revendication 2, **caractérisé en ce**
a) **que** l'unité de déplacement (41) est entraînée fluidiquement, en particulier par voie pneumatique, et/ou
b) **que** l'unité de déplacement (41) présente une unité linéaire (42, 43) qui déplace linéairement l'unité d'amarrage (28), et/ou
c) **que** l'unité linéaire (42, 43) déplace l'unité d'amarrage (28) à angle droit par rapport au plan de palette, et/ou
d) **que** l'unité linéaire (42, 43) présente un chariot de guidage (42) et un rail de guidage (43) qui est mobile linéairement dans le chariot de guidage (42), et/ou
e) **que** le chariot de guidage (42) présente un circuit à billes pour le guidage avec un jeu réduit du rail de guidage (43) mobile, et/ou
f) **que** le chariot de guidage (42) est monté fixement par rapport à la bride de robot (2), et/ou
g) **que** l'unité linéaire (42, 43) présente un vérin pneumatique (44) qui déplace linéairement le rail de guidage (43) avec l'unité d'amarrage (28) dans le chariot de guidage (42).

4. Préhenseur de palette (1) selon l'une des revendications précédentes, **caractérisé en ce**
a) **que** l'unité d'amarrage (28) présente au moins un élément de centrage (37, 38), en particulier un boulon de centrage (37, 38), pour la mise en prise de centrage dans un élément de centrage (39, 40) complémentaire dans le système de serrage (6-9), et/ou
b) **que** l'unité d'amarrage (28) présente plusieurs, en particulier six, couplages fluidiques (29, 30, 31, 32) pour l'accouplement à des couplages fluidiques (14, 15, 16, 17) correspondants dans le système de serrage (6-9), et/ou
c) **que** l'unité d'amarrage (28) présente plusieurs, en particulier quatre, couplages pneumatiques (31, 32) pour l'accouplement à des couplages pneumatiques (16, 17) correspondants dans le système de serrage (6-9), et/ou
d) **que** l'unité d'amarrage (28) présente plusieurs, en particulier deux, couplages hydrauliques (29, 30) pour l'accouplement à des couplages hydrauliques (14, 15) correspondants dans le système de serrage (6-9).

5. Préhenseur de palette (1) selon l'une des revendications précédentes, **caractérisé en ce que** l'unité d'amarrage (28) présente un mécanisme de verrouillage (46-51) pour le verrouillage mécanique amovible de l'unité d'amarrage (28) d'une part et du système de serrage (6-9) d'autre part.

6. Préhenseur de palette (1) selon l'une des revendications précédentes, **caractérisé en ce**
a) **que** le dispositif de préhension (19-22, 24, 25) présente une fourche de palette avec deux bras de fourche (19, 20) étirés en longueur pour la préhension latérale de la palette (3), et/ou
b) **que** les bras de fourche (19, 20) des fourches de palette s'étendent parallèlement l'un à l'autre, et/ou
c) **que** les bras de fourche (19, 20) présentent respectivement deux éléments de retenue (21, 22, 24, 25) qui viennent en prise lors de la préhension de la palette (3) respectivement dans un élément de retenue (23, 26, 27) complémentaire au niveau de la palette (3), et/ou
d) **que** les éléments de retenue (21-27) complémentaires sont un boulon (23, 24, 25) et un évidement (21, 22, 26, 27).

7. Robot avec un préhenseur de palette (1) selon l'une des revendications précédentes.

8. Système de machine avec
a) une machine-outil avec
a1) une plaque (5) et
a2) au moins un système de serrage (6-9) sur la plaque (5) de la machine-outil,
b) une palette (3) mobile avec une structure (4), en particulier un étau de machine (4), et
c) le robot selon la revendication 7 avec le préhenseur de palette (1) selon l'une des revendications 1 à 6, dans lequel au choix le robot dépose la palette (3) sur le système de serrage (6-9) de la machine-outil ou la retire du système de serrage (6-9) de la machine-outil.

9. Système de machine selon la revendication 8, **caractérisé en ce**
a) **que** la palette (3) présente au niveau de son côté inférieur au moins un, de préférence quatre, tenons de serrage (10-13) pour l'introduction dans respectivement une douille de serrage correspondante du système de serrage (6-9), et/ou
b) **que** la palette (3) porte au niveau de son côté supérieur la structure (4), en particulier l'étau de machine (4).

10. Procédé de fonctionnement pour un préhenseur de palette (1), en particulier pour un préhenseur de palette (1) selon l'une des revendications 1 à 6, avec les étapes suivantes :
a) la préhension d'une palette (3) par le préhenseur de palette (1) qui est guidé de manière mobile par un robot,
b) l'abaissement de la palette (3) sur un système de serrage (6-9) au moyen du robot,
c) le serrage de la palette (3) sur le système de serrage (6-9), dans lequel le système de serrage (6-9) est commandé pour le serrage avec un milieu d'entraînement, en particulier par voie pneumatique ou hydraulique,
**caractérisé en ce**
d) **que** le milieu d'entraînement servant au serrage de la plaque (5) sur le système de serrage (6-9) est amené au système de serrage (6-9) par le préhenseur de palette (1).

11. Procédé de fonctionnement selon la revendication 10, **caractérisé en ce**
a) **que** pour le serrage du système de serrage (6-9) une unité d'amarrage (28) du préhenseur de palette (1) est amarrée au système de serrage (6-9) afin de fournir le milieu d'entraînement au système de serrage (6-9), et/ou
b) **que** l'unité d'amarrage (28) du préhenseur de palette (1) est amarrée après un processus de serrage par le système de serrage (6-9).

12. Procédé de fonctionnement selon la revendication 11, **caractérisé en ce**
a) **que** l'unité d'amarrage (28) pour l'amarrage et la séparation réalise un mouvement d'amarrage qui est orienté de préférence à angle droit par rapport au plan de palette de la palette (3), et
b) **que** l'unité d'amarrage (28) réalise pour le verrouillage mécanique amovible de l'unité d'amarrage (28) d'une part et du système de serrage (6-9) d'autre part un mouvement de verrouillage, qui est orienté de préférence parallèlement au plan de palette de la palette (3).

13. Procédé de fonctionnement selon la revendication 12, **caractérisé en ce**
a) **que** le mouvement d'amarrage est entraîné par voie pneumatique, et/ou
b) **que** le mouvement de verrouillage est entraîné par voie hydraulique.
